# EUROPÄISCHE PATENTANMELDUNG

(11) **EP 4 378 676 A1**
(43) Veröffentlichungstag der Anmeldung: **05.06.2024**
(21) Anmeldenummer: 23209164.5
(22) Anmeldetag: 10.11.2023
(51) Int. Cl.: B30B 11/08, B30B 15/00, B30B 15/26, B30B 15/06

(54) **VERFAHREN ZUM BEWERTEN DES ZUSTANDS VON PRESSSTEMPELN EINER RUNDLÄUFERPRESSE SOWIE RUNDLÄUFERPRESSE**

(30) Priorität: 29.11.2022 DE 102022131493
(71) Anmelder: Fette Compacting GmbH, 21493 Schwarzenbek (DE)
(72) Erfinder: Vulp, Sven, 21514 Klein Pampau (DE); Herrmann, Janis, 23966 Wismar (DE); Petry, Ina, 22529 Hamburg (DE); Teetzen, Andreas, 21493 Schwarzenbek (DE); Gäth, Jochen, 19258 Schwanheide (DE)
(74) Vertreter: Hauck Patentanwaltspartnerschaft mbB

(57) **Zusammenfassung**

Die Erfindung betrifft ein Verfahren zum Bewerten des Zustands von Pressstempeln (14, 16) einer Rundläuferpresse, wobei die Rundläuferpresse einen mittels eines Drehantriebs drehbaren Rotor umfasst, wobei der Rotor eine obere Stempelführung (18) für obere Pressstempel (14) und eine untere Stempelführung (20) für untere Pressstempel (16) sowie eine zwischen den Stempelführungen (18, 20) angeordnete Matrizenscheibe (10) aufweist, wobei die Pressstempel (14, 16) mit Kavitäten (12) der Matrizenscheibe zusammenwirken, wobei die Rundläuferpresse weiter eine Fülleinrichtung (26) umfasst, durch die zu verpressendes Pulvermaterial in die Kavitäten der Matrizenscheibe gefüllt wird, und wobei die Rundläuferpresse eine Druckeinrichtung (34) mit einer oberen Druckrolle (40) und einer unteren Druckrolle (42) umfasst, die im Betrieb mit den oberen Pressstempeln und mit den unteren Pressstempeln zum Verpressen des Pulvermaterials in den Kavitäten der Matrizenscheibe zusammenwirken, wobei das Verfahren die folgenden Schritte umfasst:
• mit einem an der Druckeinrichtung (34) angeordneten Presskraftsensor (56, 60) werden die Presskraftverläufe (62, 64, 66) an den oberen und/oder unteren Pressstempeln (14, 16) während des Verpressens des Pulvermaterials gemessen,
• eine Auswerteeinrichtung (52) führt eine Zustandsanalyse der gemessenen Presskraftverläufe (62, 64, 66) durch und bewertet auf Grundlage der Zustandsanalyse individuell den Zustand der oberen und/oder unteren Pressstempel (14, 16).

Die Erfindung betrifft außerdem eine Rundläuferpresse.

## Beschreibung

Die Erfindung betrifft ein Verfahren zum Bewerten des Zustands von Pressstempeln einer Rundläuferpresse, wobei die Rundläuferpresse einen mittels eines Drehantriebs drehbaren Rotor umfasst, wobei der Rotor eine obere Stempelführung für obere Pressstempel und eine untere Stempelführung für untere Pressstempel sowie eine zwischen den Stempelführungen angeordnete Matrizenscheibe aufweist, wobei die Pressstempel mit Kavitäten der Matrizenscheibe zusammenwirken, wobei die Rundläuferpresse weiter eine Fülleinrichtung umfasst, durch die zu verpressendes Pulvermaterial in die Kavitäten der Matrizenscheibe gefüllt wird, und wobei die Rundläuferpresse eine Druckeinrichtung mit einer oberen Druckrolle und einer unteren Druckrolle umfasst, die im Betrieb mit den oberen Pressstempeln und mit den unteren Pressstempeln zum Verpressen des Pulvermaterials in den Kavitäten der Matrizenscheibe zusammenwirken.

Die Erfindung betrifft außerdem eine Rundläuferpresse, umfassend einen mittels eines Drehantriebs drehbaren Rotor, wobei der Rotor eine obere Stempelführung für obere Pressstempel und eine untere Stempelführung für untere Pressstempel sowie eine zwischen den Stempelführungen angeordnete Matrizenscheibe aufweist, wobei die Pressstempel mit Kavitäten der Matrizenscheibe zusammenwirken, wobei die Rundläuferpresse weiter eine Fülleinrichtung umfasst, durch die zu verpressendes Pulvermaterial in die Kavitäten der Matrizenscheibe gefüllt wird, und wobei die Rundläuferpresse eine Druckeinrichtung mit einer oberen Druckrolle und einer unteren Druckrolle umfasst, die im Betrieb mit den oberen Pressstempeln und mit den unteren Pressstempeln zum Verpressen des Pulvermaterials in den Kavitäten der Matrizenscheibe zusammenwirken.

In Rundläuferpressen ist regelmäßig eine Vielzahl von oberen und unteren Pressstempeln vorgesehen, die paarweise jeweils einer Kavität einer Matrizenscheibe zugeordnet sind. Im Betrieb der Rundläuferpresse drehen die oberen und unteren Pressstempel gemeinsam mit der Matrizenscheibe, wobei ihre axiale Bewegung durch Steuerkurven gesteuert und durch obere und untere Stempelführungen geführt wird. Im Zuge der Drehung durchläuft die Matrizenscheibe verschiedene Einrichtungen der Rundläuferpresse, nämlich eine Fülleinrichtung, in der zu verpressendes Pulvermaterial in die Kavitäten der Matrizenscheibe gefüllt wird und eine Druckeinrichtung, in der die oberen und unteren Pressstempel durch obere und untere Druckrollen zum Verpressen des Pulvermaterials zu Presslingen, wie Tabletten, in die Kavitäten gedrückt werden. Nachfolgend zu der Druckeinrichtung werden die oberen Pressstempel nach oben aus den Kavitäten geführt und die in den Kavitäten erzeugten Presslinge werden durch die unteren Pressstempel auf die Oberseite der Matrizenscheibe geschoben. Beispielsweise durch einen Abstreifer werden die Presslinge anschließend von der Matrizenscheibe in einen Ausgang der Rundläuferpresse abgestreift, von wo sie einer weiteren Verarbeitung zugeführt werden.

Rundläuferpressen werden mit hohen Rotordrehzahlen und entsprechend hohen Produktionsgeschwindigkeiten betrieben. Im Zuge der großen Anzahl von Pressvorgängen kommt es zu Verschleiß der Pressstempel. Insbesondere die Interaktion der Stempelköpfe mit den Druckrollen kann zu einer Abflachung der Stempelköpfe im Bereich ihrer Spiegelfläche führen. Dies beeinflusst die funktionale Länge der Pressstempel, was wiederum Einfluss auf den Produktionsprozess und somit die Qualität der Presslinge hat.

Der Zustand der Pressstempel wird üblicherweise durch visuelle Begutachtung beurteilt. Diese Bewertungsmethode des Zustands der Pressstempel ist allerdings ungenau und hängt von der die Pressstempel bewertenden Bedienperson ab. Die Definition geeigneter objektiver Kriterien zur Zustandsbewertung der Pressstempel und gegebenenfalls zu ihrem Austausch ist schwierig. Manuelle Überprüfungsmethoden sind mit einem erheblichen Zeitaufwand verbunden. Ein unzureichender Zustand der Pressstempel beispielsweise aufgrund eines erhöhten Verschleißes macht sich in der Praxis häufig erst bemerkbar, wenn Produktionsprobleme oder eine unzureichende Qualität der hergestellten Presslinge auftreten. Es wurde auch bereits vorgeschlagen, aus der Presskraft der Pressstempel Rückschlüsse auf den Zustand der Pressstempel zu ziehen. Hierzu kann die Presskraft mittels an der Druckeinrichtung angeordneten Kraftmessdosen gemessen werden. Eine Zustandsanalyse sämtlicher Pressstempel in Echtzeit ist damit bislang allerdings nicht möglich.

In WO 2021/058516 A1 wird eine Presskraftmessung mit in die jeweiligen Pressstempel eingebauten Messeinrichtungen vorgeschlagen, wobei die Messeinrichtungen energieautark funktionsfähig sein sollen. Dadurch soll es möglich werden, physikalische oder chemische Eigenschaften während der gesamten Rotordrehung einer Rundläuferpresse kontinuierlich aufzunehmen, da die Messeinrichtungen durch die Integration in die rotierenden Pressstempel nicht stationär an einem Ort der Rundläuferpresse angeordnet sind. Auch soll auf diese Weise die in WO 2021/058516 A1 als nachteilig beschriebene Anordnung vermieden werden, bei der die Presskraft an Druckrollen der Druckeinrichtung gemessen wird, so dass zwischen Sensor und Pressstempel weitere Komponenten vorliegen. WO 2021/058516 A1 beschreibt, dass diese zwischenliegenden Komponenten aufgrund unterschiedlicher Festigkeit und Steifigkeit die Qualität der Kraftmessung beeinflussen.

Eine Ausstattung jedes einzelnen Pressstempels mit einer Messeinrichtung, wie in WO 2021/058516 A1 beschrieben, ist allerdings mit hohem Aufwand und hohen Kosten verbunden. Pressstempel von Rundläuferpressen werden aus Metall, insbesondere Edelstahl, gefertigt. Dies macht die Integration einer Messeinrichtung in den Pressstempel ohne unerwünschte Beeinträchtigung der Stabilität des Pressstempels sehr aufwendig. Gleichzeitig ist die Signalübertragung von der Messeinrichtung zu einer die Messwerte empfangenden Einrichtung aufgrund des Werkstoffs der Pressstempel erheblich beeinträchtigt.

Ausgehend von dem erläuterten Stand der Technik liegt der Erfindung daher die Aufgabe zugrunde, ein Verfahren und eine Rundläuferpresse der eingangs genannten Art bereitzustellen, mit denen eine Zustandsanalyse der Pressstempel mit geringem konstruktiven und Kostenaufwand für jeden Pressstempel zuverlässig und nach objektiven Kriterien möglich ist, insbesondere in Echtzeit.

Die Erfindung löst die Aufgabe durch die unabhängigen Ansprüche 1 und 22. Vorteilhafte Ausgestaltungen finden sich in den abhängigen Ansprüchen, der Beschreibung und den Figuren.

Für ein Verfahren der eingangs genannten Art löst die Erfindung die Aufgabe durch die folgenden Schritte:
- mit einem an der Druckeinrichtung angeordneten Presskraftsensor werden die Presskraftverläufe an den oberen und/oder unteren Pressstempeln während des Verpressens des Pulvermaterials gemessen,
- eine Auswerteeinrichtung führt eine Zustandsanalyse der gemessenen Presskraftverläufe durch und bewertet auf Grundlage der Zustandsanalyse individuell den Zustand der oberen und/oder unteren Pressstempel.

Für eine Rundläuferpresse der eingangs genannten Art löst die Erfindung die Aufgabe dadurch, dass ein an der Druckeinrichtung angeordneter Presskraftsensor vorgesehen ist zum Messen der Presskraftverläufe an den oberen und/oder unteren Pressstempeln während des Verpressens des Pulvermaterials, und dass eine Auswerteeinrichtung vorgesehen ist, die dazu ausgebildet ist, eine Zustandsanalyse der gemessenen Presskraftverläufe durchzuführen und auf Grundlage der Zustandsanalyse individuell den Zustand der oberen und/oder unteren Pressstempel zu bewerten.

Der grundsätzliche Aufbau der Rundläuferpresse, wie sie Gegenstand der vorliegenden Erfindung ist bzw. beim erfindungsgemäßen Verfahren zum Einsatz kommt, wurde eingangs erläutert. Erfindungsgemäß ist an der Druckeinrichtung mindestens ein Presskraftsensor angeordnet. Der Presskraftsensor kann zum Beispiel an der oberen und/oder der unteren Druckrolle der Druckeinrichtung bzw. bei Vorhandensein an einer oberen und/oder unteren Vordruckrolle einer Vordruckeinrichtung der Druckeinrichtung angeordnet sein. Insbesondere kann der Presskraftsensor an einer Halterung der oberen und/oder unteren Druckrollen bzw. oberen und/oder unteren Vordruckrollen angeordnet sein, insbesondere an einer Aufnahme eines Verstellgetriebes der (Vor-)Druckrollen. Der Presskraftsensor kann zum Beispiel als Kraftmessdose ausgebildet sein, die im Zuge der Presskraft eine elastische Verformung erfährt, die wiederum einen zu der Presskraft proportionalen elektrischen Spannungswert erzeugt, der als Messsignal ausgewertet werden kann. Mit dem mindestens einen Presskraftsensor werden für die oberen und/oder unteren Pressstempel, insbesondere für alle oberen und/oder alle unteren Pressstempel Presskraftverläufe während des Verpressens des Pulvermaterials gemessen, also während des Kontakts der Pressstempel mit den oberen und/oder unteren Druckrollen bzw. oberen und/oder unteren Vordruckrollen. Es wird also der Presskraftverlauf über der Zeit oder über dem Weg gemessen. Ergebnis der Messung ist eine Presskraftkurve über der Zeit oder dem Weg während des Pressvorgangs, insbesondere ab dem ersten Kontakt der Pressstempel mit den Druckrollen bzw. Vordruckrollen bis der Kontakt beendet ist. Dabei wird ein hochfrequenter Presskraftverlauf gemessen und hochfrequent an eine Auswerteeinrichtung gegeben. Die Auswerteeinrichtung führt auf Grundlage der empfangenen Messergebnisse eine Zustandsanalyse der gemessenen Presskraftverläufe durch und bewertet auf Grundlage der Zustandsanalyse individuell den Zustand der oberen und/oder der unteren Pressstempel, insbesondere sämtlicher oberen und/oder sämtlicher unteren Pressstempel. Die aufgenommenen Presskraftverläufe werden von der Auswerteeinrichtung im Rahmen der Zustandsanalyse also individuell analysiert und der Zustand der den analysierten Presskraftverläufen jeweils zugeordneten Pressstempel wird auf dieser Grundlage von der Auswerteeinrichtung individuell bewertet. Dabei kann der Zustand jedes Pressstempels der Rundläuferpresse bewertet werden, und zwar über die gesamte Produktionsdauer der Rundläuferpresse. Es werden also insbesondere wiederholt die Presskraftverläufe sämtlicher oberer Pressstempel und/oder sämtlicher unterer Pressstempel im Zuge des Umlaufs des Rotors gemessen und der Zustand der Pressstempel fortlaufend analysiert und bewertet. Die Messung der Presskraftverläufe, die Übergabe der Messwerte an die Auswerteeinrichtung und/oder die Zustandsanalyse sowie die Bewertung der Pressstempel durch die Auswerteeinrichtung können in Echtzeit erfolgen. Gleichzeitig wird eine lückenlose Zustandsbewertung der Pressstempel ermöglicht. Die Zustandsbewertung erfolgt reproduzierbar auf Grundlage objektiver und jederzeit nachprüfbarer Bewertungskriterien. Die Bewertung ist folglich unabhängig von einer Bedienperson. Sie kann vollautomatisch erfolgen. Gleichzeitig ist der Aufwand der Zustandsbewertung im Gegensatz zu dem eingangs erläuterten Stand der Technik mit jeweils in die Pressstempel integrierten Messeinrichtungen erheblich verringert, und zwar sowohl in konstruktiver als auch in Kostenhinsicht. Die Signalqualität der Presskraftsensoren ist aufgrund der stationären Anordnung an der Druckeinrichtung jederzeit zuverlässig gewährleistet. Die Erfindung erlaubt eine präzise Vorhersage zum Verschleißgrad der Pressstempel in Echtzeit. Die Umsetzung in bestehenden Systemen ist einfach und somit auch für unterschiedliche Produkte und Rundläuferpressen in einfacher Weise einsetzbar. Aufgrund der präzisen Bewertung des Zustands jedes einzelnen Pressstempels werden Qualitätsmerkmale der hergestellten Presslinge nachhaltig optimiert. Die Prozessstabilität wird erhöht und ungeplante Ausfälle der Rundläuferpresse werden minimiert. Die Pressstempel können gleichzeitig zuverlässig länger genutzt werden, da ihr Zustand präzise bekannt ist. Aufgrund der Bewertung des Zustands sämtlicher Pressstempel und der eindeutigen Identifikation der bewerteten Pressstempel kann eine Neupaarung, eine Reinigung oder auch ein Austausch von Pressstempeln vorgenommen werden, um einen Qualitätsverlust der Presslinge oder einen ungeplanten Stopp der Rundläuferpresse zu verhindern.

Die Messergebnisse des Presskraftsensors können zum Beispiel über Mikrocontroller oder hochfrequente Eingangsklemmen an die Auswerteeinrichtung übergeben werden. Die Auswerteeinrichtung kann in die Maschinensteuerung der Rundläuferpresse integriert sein. Die Auswerteeinrichtung kann aber auch getrennt von der Rundläuferpresse angeordnet sein, zum Beispiel im selben Produktionsraum wie die Rundläuferpresse oder in einem von dem Produktionsraum entfernten Ort. Hierzu wäre es auch möglich, die Messdaten des Presskraftsensors in eine Cloud zu übertragen, von wo sie der weiteren Auswertung zugeführt werden können. Auch die Auswerteeinrichtung kann in die Cloud integriert sein. Die Auswerteeinrichtung kann insbesondere eine Software umfassen zum Durchführen der Zustandsanalyse und zum Bewerten des Zustands der Pressstempel auf Grundlage der Zustandsanalyse.

Nach einer Ausgestaltung kann die Zustandsanalyse einen Vergleich der gemessenen Presskraftverläufe mit mindestens einem Referenzpresskraftverlauf umfassen. Der mindestens eine Referenzpresskraftverlauf kann ein historischer Presskraftverlauf sein, der zum Beispiel zu Beginn eines Produktionslaufs oder zu einem früheren Zeitpunkt aufgenommen wurde und zu einer guten Presslingsqualität geführt hat. Der Referenzpresskraftverlauf kann in einer Datenbank hinterlegt sein, auf die die Auswerteeinrichtung zur Bewertung des Zustands des jeweiligen Pressstempels zugreift. Die Auswerteeinrichtung ermittelt eine Abweichung des jeweils gemessenen Presskraftverlaufs mit dem Referenzpresskraftverlauf, zum Beispiel eine Abweichung definierter Kriterien des Verlaufs, wie unten noch näher erläutert. Aus dem Grad der Abweichung kann die Auswerteeinrichtung Rückschlüsse auf den Zustand des jeweiligen Pressstempels ziehen. Zum Beispiel kann in der Auswerteeinrichtung ein Grenzwert hinterlegt sein für eine zulässige Abweichung des gemessenen Presskraftverlaufs von dem Referenzpresskraftverlauf. Bei Überschreiten des Grenzwerts kann die Auswerteeinrichtung den Zustand des jeweiligen Pressstempels zum Beispiel als Pressstempel mit erhöhtem Verschleiß bewerten. Verschleiß kann hierbei sowohl durch Materialabrieb am Pressstempel als auch durch Produktanhaftung am Pressstempel erzeugt werden. Der Grenzwert kann manuell bzw. empirisch ermittelt werden. Abhängig von dem jeweiligen Typ der verbauten Pressstempel, dem in der Rundläuferpresse verpressten Pulvermaterial und weiteren Eigenschaften der Rundläuferpresse können individuelle Grenzwerte in der Auswerteeinrichtung hinterlegt werden.

Nach einer weiteren Ausgestaltung kann die Auswerteeinrichtung im Rahmen der Zustandsanalyse die Breite der jeweils gemessenen Presskraftverläufe als ein Kriterium für einen Verschleiß der jeweils bewerteten Pressstempel berücksichtigen. Sofern in diesem Zusammenhang von dem jeweils bewerteten Pressstempel gesprochen wird, betrifft dies den Pressstempel, zu dem der jeweils aufgenommene Presskraftverlauf gemessen wurde. Die Breite des Presskraftverlaufs ist die Breite der aufgenommenen Kurve der Presskraft über der Zeit oder dem Weg. Zum Beispiel eine Vergrößerung der Breite des Presskraftverlaufs, insbesondere gegenüber einer Referenzpresskraftkurve, kann auf einen erhöhten Verschleiß des Pressstempels hinweisen. So zeigen Pressstempel mit abgeschliffenen Stempelköpfen, insbesondere abgeschliffenen bzw. vergrößerten Spiegelflächen, einen früheren Anstieg der Presskraftkurve, weil die Spiegelfläche früher auf die jeweilige Druckrolle trifft.

Nach einer weiteren Ausgestaltung kann die Auswerteeinrichtung im Rahmen der Zustandsanalyse den Betrag des Maximums der jeweils gemessenen Presskraftverläufe als ein Kriterium für einen Verschleiß der jeweils bewerteten Pressstempel berücksichtigen. Das Maximum ist wiederum das Maximum der aufgenommenen Kurve der Presskraft über der Zeit. Die Presskraftkurve kann auch mehrere Maxima aufweisen, zum Beispiel wenn gleichzeitig mehrere Stempelköpfe mit derselben Druckrolle in Kontakt sind. In diesem Fall kann der Wert eines oder beider bzw. sämtlicher Maxima berücksichtigt werden. Eine Veränderung des Maximums des Presskraftverlaufs, beispielsweise ein geringeres Maximum als bei einem Referenzpresskraftverlauf, deutet ebenfalls auf einen erhöhten Verschleiß des Pressstempels, insbesondere einen abgeschliffenen Stempelkopf oder eine verschlissene Stempelspitze, so dass sich die effektive Stempellänge verringert und dadurch die maximale Presskraft während des Pressvorgangs bei gleichbleibender Steghöhe der erzeugten Presslinge reduziert ist. Auch die zeitliche Lage eines Maximums oder gegebenenfalls mehrerer Maxima kann im Rahmen der Zustandsanalyse als ein Kriterium für einen Verschleiß des jeweils bewerteten Pressstempels berücksichtigt werden. Insbesondere kann die Auswerteeinrichtung im Rahmen der Zustandsanalyse das Vorliegen mehrerer Maxima und/oder den Abstand zwischen mehreren Maxima der jeweils gemessenen Presskraftverläufe als ein Kriterium für einen Verschleiß der jeweils bewerteten Pressstempel berücksichtigen. Je nach Verschleißgrad kann sich auch der Abstand der Spiegelflächen benachbarter Pressstempel verändern. Dies kann zum Beispiel zu einem veränderten Abstand der Maxima direkt aufeinanderfolgender Presskraftverläufe direkt aufeinanderfolgender Pressstempel führen. Insofern können auch die Lage bzw. der Abstand der Maxima der Presskraftverläufe zweier benachbarter Pressstempel als Kriterium für einen Verschleiß der jeweils bewerteten Pressstempel berücksichtigt werden.

Die Auswerteeinrichtung kann nach einer weiteren Ausgestaltung im Rahmen der Zustandsanalyse den Zeitpunkt des Anstiegs und/oder des Abstiegs der jeweils gemessenen Presskraftverläufe als ein Kriterium für einen Verschleiß der jeweils bewerteten Pressstempel berücksichtigen. Auch kann die Auswerteeinrichtung im Rahmen der Zustandsanalyse die Steigerung des Anstiegs und/oder des Abstiegs der jeweils gemessenen Presskraftverläufe als ein Kriterium für einen Verschleiß der jeweils bewerteten Pressstempel berücksichtigen. Steilere oder flachere Anstiege oder Abstiege des Presskraftverlaufs sowie veränderte Zeitpunkte des Beginns des Anstiegs und/oder des Abstiegs im Presskraftverlauf lassen auf verschiedene Verschleißmerkmale schließen, wie zum Beispiel eine vergrößerte Spiegelfläche, einen aufgrund von Verschleiß geänderten Radius des Stempelkopfes, eine verkürzte Stempellänge oder auch eine unregelmäßige, insbesondere raue, Stempelkopfoberfläche.

Die Auswerteeinrichtung kann bei Feststellen eines erhöhten Verschleißes eines bewerteten Pressstempels eine Warnmeldung ausgeben. Wie bereits erläutert, kann zum Beispiel bei Vergleich der gemessenen Presskraftverläufe mit mindestens einem Referenzpresskraftverlauf ein Grenzwert definiert sein für die Abweichung zwischen dem gemessenen Presskraftverlauf und dem Referenzpresskraftverlauf, bei dessen Überschreiten ein erhöhter Verschleiß festgestellt wird. Für das Ausgeben einer Warnmeldung kann die Auswerteeinrichtung eine Anzeigeeinrichtung umfassen. Denkbar ist auch die Ausgabe der Warnung auf einem separaten Gerät, zum Beispiel einem Computer, einem Tablet oder einem Smartphone. Beispielsweise eine Bedienperson kann dann weitere Schritte unternehmen, zum Beispiel den oder die verschlissenen Stempel untersuchen und gegebenenfalls austauschen.

Die Warnmeldung kann einen Vorschlag zum Reinigen und/oder zum Nachbehandeln des Pressstempels mit erhöhtem Verschleiß und/oder zum Austausch des Pressstempels mit erhöhtem Verschleiß durch einen neuen Pressstempel und/oder zum Austausch des gesamten Satzes von oberen und/oder unteren Pressstempeln der Rundläuferpresse durch einen Satz neuer oberer und/oder unterer Pressstempel umfassen. Der gesamte Satz von oberen bzw. unteren Pressstempeln umfasst sämtliche im Betrieb der Rundläuferpresse eingebauten oberen bzw. unteren Pressstempel. Beispielsweise wäre es also möglich, dass die Warnmeldung bei festgestelltem Verschleiß eines oder mehrerer oberer Pressstempel einen Vorschlag zum Austausch sämtlicher oberer Pressstempel umfasst bzw. dass die Warnmeldung bei festgestelltem Verschleiß eines oder mehrerer unterer Pressstempel einen Vorschlag zum Austausch sämtlicher unterer Pressstempel umfasst. Auch möglich wäre es, dass die Warnmeldung bei festgestelltem Verschleiß eines oder mehrerer oberer Pressstempel oder eines oder mehrerer unterer Pressstempel einen Vorschlag zum Austausch sämtlicher oberer und unterer Pressstempel umfasst. Auch kann die Warnmeldung einen Vorschlag zum Tausch des Pressstempels mit erhöhtem Verschleiß mit einem anderen Pressstempel der Rundläuferpresse umfassen, also eine Neupaarung des Pressstempels mit dem erhöhten Verschleiß. Damit können zum Beispiel ungünstige Paarungen von Pressstempeln vermieden werden. Kriterien für die unterschiedlichen Handlungsempfehlungen können zum Beispiel Unterschiede in der Presskraftkurve in Bezug auf weitere Parameter der Rundläuferpresse sein, wie zum Beispiel Qualitätsparameter der hergestellten Presslinge, einem Mittelwert der ermittelten Presskraft, einer Steghöhe der erzeugten Presslinge oder einer relativen Standardabweichung solcher Parameter.

Die Zustandsanalyse kann nach einer weiteren Ausgestaltung eine multivariate Datenanalyse umfassen. Multivariate Datenanalysen erlauben es, mehrere Parameter vorliegend des Presskraftverlaufs gleichzeitig zu untersuchen und zu bewerten. Insbesondere können aus den Presskraftverläufen die für den zu bewertenden Zustand der Pressstempel notwendigen Informationen von hierfür nicht relevanten Informationen unterschieden werden. Ein Beispiel für eine nicht relevante Information, die aber Einfluss auf den Presskraftverlauf hat, ist die Steghöhe der erzeugten Presslinge, also die Höhe hergestellter Tabletten. So hat naturgemäß die Menge an in den Kavitäten befindlichem zu verpressendem Pulvermaterial Einfluss auf die Presskraftkurve, zum Beispiel den Betrag des Maximums der Presskraftkurve. Der Einsatz multivariater Datenanalysen erlaubt eine Vereinfachung und damit Beschleunigung der Bewertung des Zustands, indem nur die für die Bewertung des Zustands der Pressstempel relevanten Informationen des Presskraftverlaufs identifiziert und genutzt werden.

Gemäß einer besonders praxisgemäßen Ausgestaltung kann die multivariate Datenanalyse eine Hauptkomponentenanalyse umfassen. Mittels Hauptkomponentenanalysen (Principal Components Analysis PCA) kann die Identifizierung der für die vorliegende Fragestellung, hier die Bewertung des Zustands der Pressstempel, relevanten Daten der gemessenen Presskraftverläufe und deren Trennung von den für die Bewertung des Zustands der Pressstempel nicht relevanten Informationen des Presskraftverlaufs in besonders zuverlässiger Weise erfolgen. Im Rahmen der Hauptkomponentenanalyse kann nach einer weiteren Ausgestaltung für eine Vielzahl von Presskraftverläufen mindestens eine Hauptkomponente identifiziert werden, die in Bezug auf den Verschleiß der oberen und/oder unteren Pressstempel die größte Varianz aufweist. Die Hauptkomponente(n) mit der größten Varianz enthalten die größte Information hinsichtlich des Zustands der Pressstempel und sind somit besonders aussagekräftig in Bezug auf die vorliegende Fragestellung. Durch die Reduzierung der Informationen der Presskraftverläufe auf die mindestens eine Hauptkomponente, beispielsweise zwei oder drei Hauptkomponenten, kann somit bei erheblicher Vereinfachung der Datenmenge und damit der Auswertung dennoch eine zuverlässige Bewertung des Zustands der Pressstempel, zum Beispiel des Verschleißes des Pressstempels, bis hin zu individuellen Teilen des Pressstempels, wie zum Beispiel des Stempelkopfes oder der Stempel spitze, erfolgen.

Die multivariate Datenanalyse kann auch ein multivariates Regressionsverfahren umfassen, wie zum Beispiel ein Partial Least Square Regression Verfahren (PLS/PLSR), um Modelle zur Vorhersage über den Zustand der Pressstempel bilden zu können.

Erfindungsgemäß kann die Auswerteeinrichtung auf Grundlage der Zustandsanalyse den Zustand der Spiegelfläche und/oder den Zustand der Stempelspitze der jeweils bewerteten Pressstempel und/oder die von den jeweils bewerteten Pressstempeln ausgeübte Presskraft bewerten, insbesondere auf Grundlage vorliegend erläuterter multivariater Datenanalysemethoden. Die Spiegelfläche ist bekanntlich die in der Regel eben ausgebildete Fläche auf der Oberseite des Stempelkopfes der Pressstempel und die Stempelspitze ist der an der gegenüberliegenden Unterseite der Pressstempel ausgebildete Abschnitt, der in die Kavitäten der Matrizenscheibe eintaucht.

Die Auswerteeinrichtung kann nach einer weiteren Ausgestaltung vor der Zustandsanalyse eine Datenvorverarbeitung der gemessenen Presskraftverläufe durchführen, insbesondere eine Normierung, Glättung und/oder eine Ableitung erster oder höherer Ordnung. Dies kann die nachfolgende Datenverarbeitung im Rahmen der Zustandsanalyse verbessern und vereinfachen.

Die Zustandsanalyse kann mittels Algorithmen des maschinellen Lernens durchgeführt werden. Insbesondere kann ein selbstlernender Algorithmus in der Auswerteeinrichtung hinterlegt werden, der die Kriterien für die Bewertung des Zustands der Pressstempel durch die Auswerteeinrichtung auf Grundlage von Trainingsdaten und/oder Erfahrungsdaten aus der Produktion fortlaufend optimiert. Auch Grenzwerte für eine Abweichung gemessener Presskraftverläufe von einem Referenzpresskraftverlauf können durch eine solche selbstlernende Software auf Grundlage von Trainingsdaten oder Erfahrungsdaten während des Betriebs optimiert werden. Die Algorithmen des maschinellen Lernens können zum Beispiel neuronale Netze umfassen.

Nach einer weiteren Ausgestaltung kann die Auswerteeinrichtung Ergebnisse der Zustandsanalyse bzw. der Bewertung der Pressstempel für eine Bedienperson anzeigen. Die Auswerteeinrichtung kann auch eine Eingabeeinrichtung umfassen, über die eine Bedienperson Parameter für die Zustandsanalyse vorgeben kann. Somit kann ein Nutzer der Rundläuferpresse beispielsweise Grenzwerte für eine Abweichung gemessener Presskraftverläufe von mindestens einem Referenzpresskraftverlauf eingeben oder anpassen. Die Anzeige und Eingabe kann beispielsweise direkt an der Auswerteeinrichtung erfolgen. Es ist aber auch eine Anzeige und/oder Eingabe über eine entsprechende Applikation, zum Beispiel eine Webapplikation, denkbar, zum Beispiel über einen Computer, ein Tablet oder ein Smartphone.

Es kann nach einer weiteren Ausgestaltung vorgesehen sein, dass ein Presskraftsensor an der oberen Druckrolle und ein Presskraftsensor an der unteren Druckrolle der Druckeinrichtung angeordnet ist, und dass die Presskraftverläufe an den oberen und unteren Pressstempeln beim Durchlaufen der oberen und unteren Druckrollen gemessen werden. Weiterhin kann vorgesehen sein, dass die Druckeinrichtung weiterhin eine Vordruckeinrichtung mit einer oberen Vordruckrolle und einer unteren Vordruckrolle umfasst, wobei ein Presskraftsensor an der oberen Vordruckrolle und ein Presskraftsensor an der unteren Vordruckrolle der Druckeinrichtung angeordnet ist, und dass die Presskraftverläufe an den oberen und unteren Pressstempeln beim Durchlaufen der oberen und unteren Vordruckrollen gemessen werden. Der oder die Presskraftsensoren können wie eingangs erläutert insbesondere an einer Halterung der Druckrollen bzw. Vordruckrollen angeordnet sein. Durch die vorgenannten Ausgestaltungen ist eine besonders umfassende Erfassung der Presskraftverläufe und damit Bewertung der Pressstempel möglich.

Die Rundläuferpresse, insbesondere die Auswerteeinrichtung, kann zur Durchführung des erfindungsgemäßen Verfahrens ausgebildet sein. Entsprechend kann das erfindungsgemäße Verfahren mit der erfindungsgemäßen Rundläuferpresse ausgeführt werden.

Ein Ausführungsbeispiel der Erfindung wird nachfolgend anhand von Figuren näher erläutert. Es zeigen schematisch:
- Figur 1: eine erfindungsgemäße Rundläuferpresse in abgewickelter Darstellung des Rotors,
- Figur 2: verschiedene mit der erfindungsgemäßen Rundläuferpresse aufgenommene Presskraftverläufe während des Verpressens von Pulvermaterial,
- Figur 3: ein Diagramm mit Punktwerten zu zwei erfindungsgemäß ermittelten Hauptkomponenten, und
- Figur 4: eine Darstellung des erfindungsgemäß bewerteten Zustands der Pressstempel der Rundläuferpresse.

Soweit nichts anderes angegeben ist, bezeichnen in den Figuren gleiche Bezugszeichen gleiche Gegenstände.

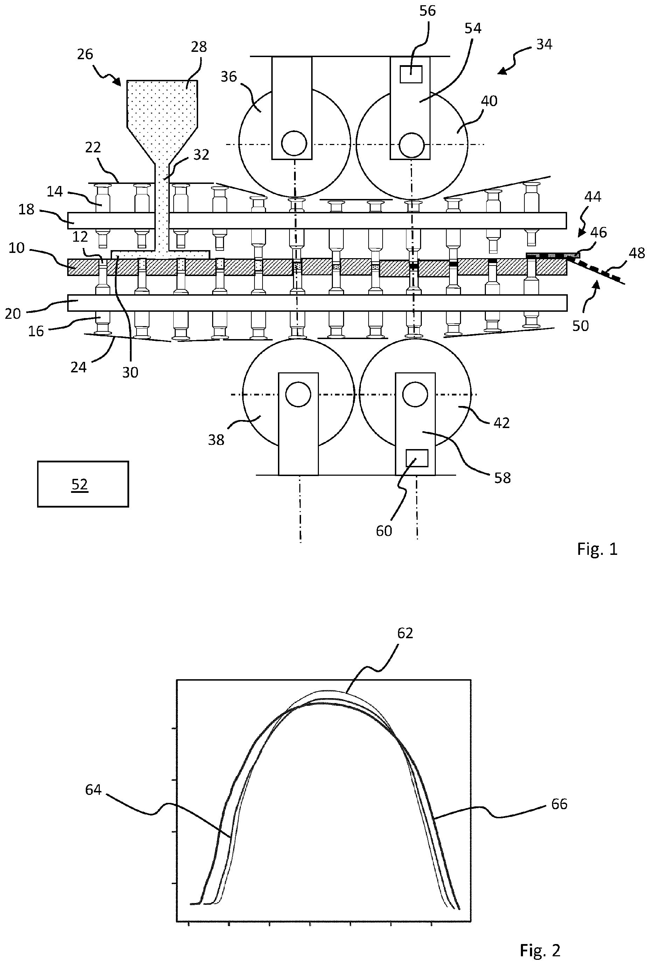

Die in Figur 1 gezeigte Rundläuferpresse ist eine Rundläuferpresse zur Tablettenherstellung, in der pulverförmiges Material zu Tabletten verpresst wird. Die Rundläuferpresse umfasst einen durch einen Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von oberen Pressstempeln 14 und unteren Pressstempeln 16, die mit der Matrizenscheibe 10 synchron umlaufen. Die oberen Pressstempel 14 sind in einer oberen Stempelführung 18 axial geführt und die unteren Pressstempel 16 sind in einer unteren Stempelführung 20 axial geführt. Die axiale Bewegung der oberen Pressstempel 14 und unteren Pressstempel 16 im Zuge der Drehung des Rotors wird durch obere Steuerkurvenelemente 22 und untere Steuerkurvenelemente 24 gesteuert. Die Rundläuferpresse umfasst weiterhin eine Fülleinrichtung 26, die ein Füllreservoir 28 und eine Füllkammer 30 aufweist, die über ein Füllrohr 32 verbunden sind. Auf diese Weise gelangt in dem vorliegenden Beispiel Pulvermaterial aus dem Füllreservoir 28 über das Füllrohr 32 schwerkraftbedingt in die Füllkammer 30 und aus dieser über eine an der Unterseite der Füllkammer 30 vorgesehene Befüllöffnung wiederum schwerkraftbedingt in die Kavitäten 12 der Matrizenscheibe 10.

Die Rundläuferpresse umfasst außerdem eine Druckeinrichtung 34. Die Druckeinrichtung 34 umfasst eine Vordruckeinrichtung mit einer oberen Vordruckrolle 36 und einer unteren Vordruckrolle 38, sowie eine Hauptdruckeinrichtung mit einer oberen Druckrolle 40 und einer unteren Druckrolle 42. Darüber hinaus umfasst die Rundläuferpresse eine Auswurfeinrichtung 44 und eine Abstreifeinrichtung 46 mit einem Abstreifelement, das die in der Rundläuferpresse hergestellten Tabletten 48 einer Ablaufeinrichtung 50 zum Abführen aus der Rundläuferpresse zuführt. Die Abstreifeinrichtung 46 kann zum Beispiel ein vorzugsweise sichelförmiges Abstreifelement umfassen, das im Bereich der Auswurfeinrichtung 44 durch die unteren Pressstempel 16 auf die Oberseite der Matrizenscheibe 10 geförderte Tabletten 48 von der Matrizenscheibe 10 abstreift und der Ablaufeinrichtung 50 zuführt.

Die Rundläuferpresse umfasst außerdem eine Auswerteeinrichtung 52 zum Steuern des Betriebs der Rundläuferpresse und zur Durchführung der erfindungsgemäßen Verfahrens, wie nachfolgend näher erläutert.

An einer Halterung 54 der oberen Druckrolle 40 ist weiterhin ein oberer Presskraftsensor 56 angeordnet. An einer Halterung 58 der unteren Druckrolle 42 ist ein unterer Presskraftsensor 60 angeordnet. Es wird darauf hingewiesen, dass auch nur eine Anordnung eines Presskraftsensors im Bereich der oberen Druckrolle 40 oder im Bereich der unteren Druckrolle 42 möglich ist. Zusätzlich oder alternativ können entsprechende Presskraftsensoren auch im Bereich der oberen Vordruckrolle 36 und/oder der unteren Vordruckrolle 38 angeordnet sein. Die unteren und oberen Presskraftsensoren 56, 60 können zum Beispiel Kraftmessdosen sein, die im Zuge des Verpressens von Pulvermaterial elastisch verformt werden, wobei die elastische Verformung einen der Presskraft proportionalen elektrischen Spannungswert ausgibt. Die Messwerte der oberen und unteren Presskraftsensoren 56, 60 liegen an der Auswerteeinrichtung 52 an. Mit den oberen und unteren Presskraftsensoren 56, 60 wird vorliegend für jeden der oberen und unteren Pressstempel 14, 16 ein Presskraftverlauf während des Verpressens des Pulvermaterials in den Kavitäten 12 der Matrizenscheibe 10 gemessen, insbesondere vom Beginn bis zum Ende des Kontakts der Stempelköpfe der Pressstempel 14, 16 mit der oberen bzw. unteren Druckrolle 40, 42.

Die Auswerteeinrichtung 52 führt eine Zustandsanalyse der gemessenen Presskraftverläufe durch und bewertet auf Grundlage der Zustandsanalyse individuell den Zustand der oberen und unteren Pressstempel 14, 16. Dies wird nachfolgend anhand eines Beispiels näher erläutert.

In Figur 2 sind verschiedene beispielsweise durch den oberen Presskraftsensor 56 aufgenommene Presskraftverläufe an den oberen Pressstempeln 14 über der Zeit dargestellt. Dabei ist für drei Verläufe die Presskraft über der Zeit aufgetragen. Der erste Presskraftverlauf 62 wurde mit nicht verschlissenen, insbesondere neuen oberen und unteren Pressstempeln 14, 16 aufgenommen. Ein weiterer Presskraftverlauf 64 wurde bei Durchlauf eines Paars aus oberem und unterem Pressstempel 14, 16 durch die oberen und unteren Druckrollen 40, 42 aufgenommen, wobei in dem dargestellten Beispiel der obere Pressstempel 14 einen erhöhten Verschleiß aufwies, insbesondere eine abgeschliffene Spiegelfläche des Stempelkopfes. Der dritte Presskraftverlauf 66 in Figur 2 wurde für ein Paar aus oberem und unterem Pressstempel 14, 16 beim Durchlauf durch die Druckrollen 40, 42 aufgenommen, wobei bei diesem Stempelpaar sowohl der obere Pressstempel 14 als auch der untere Pressstempel 16 einen erhöhten Verschleiß aufwiesen, insbesondere eine abgeschliffene Spiegelfläche des Stempelkopfes.

Ein Vergleich der Presskraftverläufe 62, 64, 66 zeigt, dass mit zunehmendem Verschleiß der Pressstempel 14, 16 der Betrag des Maximums des Presskraftverlaufs kleiner wird und gleichzeitig die Breite des Presskraftverlaufs zunimmt. Insbesondere kommt es zu einem früheren Zeitpunkt zum Anstieg des Presskraftverlaufs und zu einem späteren Zeitpunkt zum Abstieg des Presskraftverlaufs, je stärker die Pressstempel 14, 16 verschlissen sind. Der Grund hierfür wird darin gesehen, dass zum Beispiel bei abgeschliffenen Stempelköpfen die Spiegelfläche zu einem früheren Zeitpunkt in Kontakt mit der jeweiligen Druckrolle kommt und entsprechend auch zu einem späteren Zeitpunkt den Kontakt mit der jeweiligen Druckrolle verliert. Gleichzeitig ist beispielsweise durch einen abgeschliffenen Stempelkopf die effektive Länge des jeweiligen Pressstempels 14, 16 verkürzt, so dass der Maximalwert der Presskraft, also das Maximum der Presskraftkurven, bei gleichbleibender Steghöhe abnimmt. Die in Figur 2 dargestellten Presskraftverläufe 62, 64, 66 sind dabei lediglich beispielhaft. Je nach Verschleißmerkmal der Pressstempel 14, 16 können weitere Effekte auftreten, die zu einer Abweichung des gemessenen Presskraftverlaufs von dem Presskraftverlauf eines neuen Pressstempels 14, 16 führen. Beispielsweise kann das Vorhandensein mehrerer Maxima im Presskraftverlauf oder ein steilerer oder flacherer Anstieg bzw. Abstieg des Presskraftverlaufs auf weitere Verschleißmerkmale hindeuten, wie zum Beispiel einen geänderten Radius des Stempelkopfes, eine unregelmäßige Stempelkopfoberfläche, eine veränderte Spiegelflächenform oder eine verkürzte effektive Länge des jeweiligen Pressstempels 14, 16.

Nach einer ersten Ausgestaltung kann die Auswerteeinrichtung 52 die aufgenommenen Presskraftverläufe 62, 64, 66 mit einem Referenzpresskraftverlauf vergleichen. Als Referenzpresskraftverlauf könnte vorliegend zum Beispiel der Presskraftverlauf 62 der Figur 2 angenommen werden, der für ein neues und damit nicht verschlissenes Stempelpaar aufgenommen wurde. Es können dann zum Beispiel in der Auswerteeinrichtung 52 Grenzwerte hinterlegt sein für bestimmte Abweichungsmerkmale der aufgenommenen Presskraftverläufe 64, 66 von dem Referenzpresskraftverlauf 62. Zum Beispiel kann ein Grenzwert für eine zulässige Verbreiterung der Presskraftverläufe 64, 66 gegenüber dem Referenzpresskraftverlauf 62 und/oder ein Grenzwert für eine zulässige Verringerung des Maximums der Presskraftverläufe 64, 66 gegenüber dem Referenzpresskraftverlauf 62 definiert werden. Diese Grenzwerte können durch eine Bedienperson eingegeben werden, beispielsweise anhand von Erfahrungswerten. Die Grenzwerte können individuell für die jeweilige Rundläuferpresse, die im Einsatz befindlichen Stempel sowie die zu verpressenden Tabletten, insbesondere das Pulvermaterial und zum Beispiel die Steghöhe, hinterlegt sein. Es ist auch möglich, dass in der Auswerteeinrichtung 52 eine Software hinterlegt ist, die mittels Algorithmen des maschinellen Lernens, zum Beispiel umfassend neuronale Netze, die hinterlegten Grenzwerte fortlaufend überprüft und optimiert.

Bei Überschreiten eines der Grenzwerte kann die Auswerteeinrichtung 52 zum Beispiel eine Warnmeldung ausgeben, beispielsweise auf einer Anzeigeeinrichtung oder über eine Software zum Beispiel auf einem Computer, Tablet oder Smartphone. Die Warnmeldung kann zum Beispiel einen erhöhten Verschleiß bestimmter Pressstempel 14, 16 anzeigen und Handlungsempfehlungen geben, zum Beispiel für einen Austausch verschlissener Pressstempel 14, 16 oder des gesamten Satzes von oberen und/oder unteren Pressstempeln 14, 16. Auch denkbar sind Handlungsempfehlungen zur Reinigung oder Nachbearbeitung der verschlissenen Pressstempel 14, 16 oder auch Empfehlungen zum Tausch von Pressstempeln 14, 16 der Rundläuferpresse untereinander, also das Neu-Paaren von oberen Pressstempeln 14 und unteren Pressstempeln 16, um zum Beispiel ungünstige Paarungen zu vermeiden.

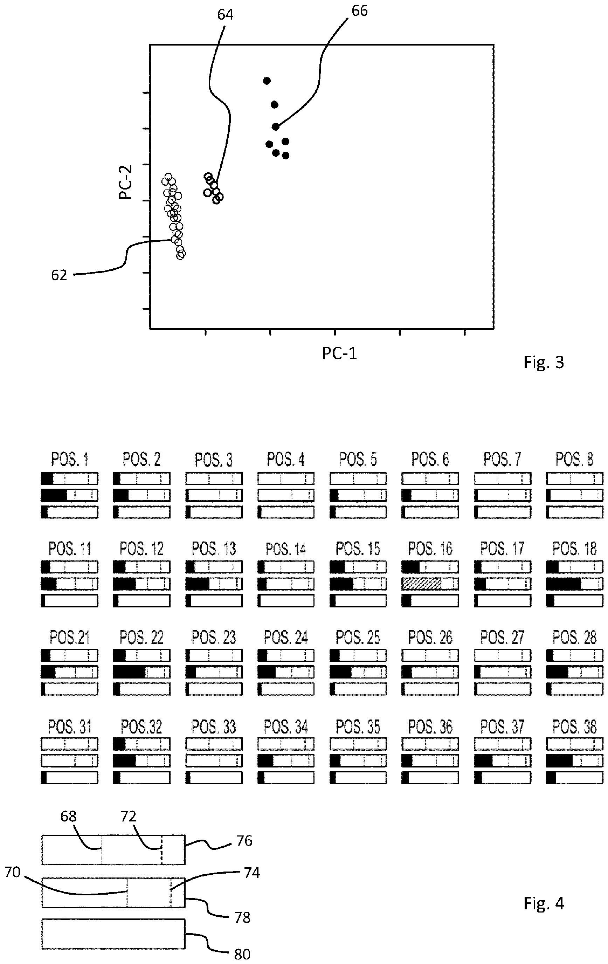

Anhand von Figur 3 soll eine weitere Möglichkeit zur Auswertung der aufgenommenen Presskraftverläufe 62, 64, 66 erläutert werden. In diesem Fall führt die Auswerteeinrichtung 52 eine multivariate Datenanalyse durch, insbesondere umfassend eine Hauptkomponentenanalyse. Die Hauptkomponentenanalyse hat zum Ziel, für eine Vielzahl aufgenommener Presskraftverläufe 62, 64, 66 Hauptkomponenten zu identifizieren, die in Bezug auf den Verschleiß der Pressstempel 14, 16 eine große Varianz aufweisen, also eine gute Unterscheidung hinsichtlich für den Verschleiß maßgeblicher Kriterien bieten.

In Figur 3 ist in einem sogenannten Scores Plot eine grafische Darstellung der in Figur 2 gezeigten Presskraftkurven 62, 64, 66 im Raum zweier im Zuge der Hauptkomponentenanalyse ermittelten Hauptkomponenten PC-1 und PC-2 dargestellt. Die Presskraftverläufe 62, 64, 66 sind als Punkte dargestellt, wobei jeweils mehrere Messungen der entsprechenden Stempelpaare zum Beispiel im Zuge eines mehrfachen Umlaufs des Rotors der Rundläuferpresse zugrunde gelegt sind, so dass jeweils mehrere Punkte entsprechend den Presskraftverläufen 62, 64, 66 dargestellt sind. Die Darstellung in einem solchen Scores Plot ist derart, dass sich zwei Punkte umso ähnlicher sind, je dichter sie entlang einer Achse angeordnet sind.

In Figur 3 ist gut zu erkennen, dass sich die Presskraftverlaufsgruppen 62 für nicht verschlissene, neue obere und untere Pressstempel 14, 16, die Presskraftverlaufspunkte 64 für Paare von oberen und unteren Pressstempeln 14, 16, bei denen der obere Pressstempel 14 einen erhöhten Verschleiß aufweist, und die Presskraftverlaufspunkte 66 für Stempelpaare, bei denen sowohl der obere als auch der unsere Pressstempel 14, 16 einen erhöhten Verschleiß aufweisen, insbesondere in der Hauptkomponente PC-1 deutlich unterscheiden. In der Hauptkomponente PC-2 ist eine solche Unterscheidung hingegen nicht möglich.

Vorliegend kann somit gefolgert werden, dass die Hauptkomponente PC-1 Unterschiede bezüglich des Verschleißzustands der Pressstempel 14, 16, insbesondere des Stempelkopfes, beschreibt und in dem dargestellten Beispiel 60,17 % der Gesamtvarianz der Proben umfasst. Die Hauptkomponente PC-2 beschreibt folglich andere Unterschiede zwischen den Presskraftverläufen 62, 64, 66, die nicht unmittelbar dem Verschleißzustand der Pressstempel 14, 16 zuzuordnen sind. Beispielsweise kann die Hauptkomponente PC-2 unterschiedlich eingestellte Steghöhen der hergestellten Tabletten beschreiben. Damit lässt sich die multivariate Datenanalyse für die Auswertung der Presskraftverläufe 62, 64, 66 sehr gut nutzen, um zum Beispiel den Verschleißzustand der Pressstempel 14, 16, insbesondere ihrer Stempelköpfe, zu bewerten. Auch auf dieser Grundlage kann die Auswerteeinrichtung 52 den Zustand der Pressstempel 14, 16 also bewerten.

In Figur 4 ist beispielhaft eine mögliche Anzeige des jeweils durch die Auswerteeinrichtung 52 bewerteten Zustands oberer Pressstempel gezeigt, wobei in dem gezeigten Beispiel 38 obere Pressstempel 14 der Rundläuferpresse bewertet und angezeigt sind. Für jede Stempelposition ist die Bewertung des Zustands unterschiedlicher Parameter der oberen Pressstempel 14 angezeigt. Die jeweils drei Balken der Stempelpositionen sind in Figur 4 unten links zur Veranschaulichung vergrößert dargestellt. Der obere Balken 76 zeigt jeweils den Verschleißzustand des Stempelkopfes, insbesondere der Spiegelfläche, an. Der mittlere Balken 78 zeigt jeweils eine Abweichung der gemessenen maximalen Presskraft von einem Sollwert an und der untere Balken 80 zeigt jeweils eine anderweitige Formabweichung des Pressstempels 14, zum Beispiel eine verringerte effektive Länge, an. Diese unterschiedlichen Bewertungsparameter können zum Beispiel anhand eines Vergleichs der aufgenommenen Presskraftverläufe 64, 66 mit dem Referenzpresskraftverlauf 62 ermittelt werden. Eine Bewertung ist entsprechend auch möglich über die Hauptkomponentenanalyse, wie oben erläutert.

In dem dargestellten Beispiel sind jeweils für die oberen Balken 76 und die mittleren Balken 78 ein erster Grenzwert 68 bzw. 70 und ein zweiter Grenzwert 72 bzw. 74 eingezeichnet, wie in der vergrößerten Darstellung der Balken 76, 78 gut zu erkennen. Erreicht der jeweilige Verschleißzustand den ersten Grenzwert 68 bzw. 70 wird eine erste Warnung durch die Auswerteeinrichtung 52 ausgegeben. In dem dargestellten Beispiel ist dies bei dem oberen Pressstempel 14 an Position 16 im mittleren Balken 78 der Fall. Bei Erreichen des zweiten Grenzwerts 72, 74 wird eine Aufforderung durch die Auswerteeinrichtung 52 zum Austausch des jeweiligen Pressstempels 14 oder zum Austausch des gesamten Satzes von oberen und/oder unteren Pressstempeln 14, 16 ausgegeben. Hinsichtlich der Formabweichung, die jeweils in dem unteren Balken 80 bewertet wird, wird eine entsprechende Warnmeldung durch die Auswerteeinrichtung 52 ausgegeben, sobald jeweils das Ende des Balkens erreicht ist.

Die Darstellung der Figur 4 kann zum Beispiel in einer Anzeigeeinrichtung der Auswerteeinrichtung 52 oder über eine entsprechende Applikation auf einem Computer, Tablet oder Smartphone für eine Bedienperson angezeigt werden. Dies kann fortlaufend aktualisiert während des Betriebs der Rundläuferpresse erfolgen, so dass die Bedienperson jederzeit einen Überblick über den Verschleißzustand der Pressstempel 14, 16 hat und entsprechend reagieren kann.

### Bezugszeichenliste

- 10: Matrizenscheibe
- 12: Kavitäten
- 14: obere Pressstempel
- 16: untere Pressstempel
- 18: obere Stempelführung
- 20: untere Stempelführung
- 22: obere Steuerkurvenelemente
- 24: untere Steuerkurvenelemente
- 26: Fülleinrichtung
- 28: Füllreservoir
- 30: Füllkammer
- 32: Füllrohr
- 34: Druckeinrichtung
- 36: obere Vordruckrolle
- 38: untere Vordruckrolle
- 40: obere Druckrolle
- 42: untere Druckrolle
- 44: Auswurfeinrichtung
- 46: Abstreifeinrichtung
- 48: Tabletten
- 50: Ablaufeinrichtung
- 52: Auswerteeinrichtung
- 54: Halterung
- 56: oberer Presskraftsensor
- 58: Halterung
- 60: unterer Presskraftsensor
- 62: erster Presskraftverlauf
- 64: zweiter Presskraftverlauf
- 66: dritter Presskraftverlauf
- 68: erster Grenzwert
- 70: erster Grenzwert
- 72: zweiter Grenzwert
- 74: zweiter Grenzwert
- 76: oberer Balken
- 78: mittlerer Balken
- 80: unterer Balken

## Patentansprüche

1. Verfahren zum Bewerten des Zustands von Pressstempeln (14, 16) einer Rundläuferpresse, wobei die Rundläuferpresse einen mittels eines Drehantriebs drehbaren Rotor umfasst, wobei der Rotor eine obere Stempelführung (18) für obere Pressstempel (14) und eine untere Stempelführung (20) für untere Pressstempel (16) sowie eine zwischen den Stempelführungen (18, 20) angeordnete Matrizenscheibe (10) aufweist, wobei die Pressstempel (14, 16) mit Kavitäten (12) der Matrizenscheibe (10) zusammenwirken, wobei die Rundläuferpresse weiter eine Fülleinrichtung (26) umfasst, durch die zu verpressendes Pulvermaterial in die Kavitäten (12) der Matrizenscheibe (10) gefüllt wird, und wobei die Rundläuferpresse eine Druckeinrichtung (34) mit einer oberen Druckrolle (40) und einer unteren Druckrolle (42) umfasst, die im Betrieb mit den oberen Pressstempeln (14) und mit den unteren Pressstempeln (16) zum Verpressen des Pulvermaterials in den Kavitäten (12) der Matrizenscheibe (10) zusammenwirken, wobei das Verfahren die folgenden Schritte umfasst:
• mit einem an der Druckeinrichtung (34) angeordneten Presskraftsensor (56, 60) werden die Presskraftverläufe (62, 64, 66) an den oberen und/oder unteren Pressstempeln (14, 16) während des Verpressens des Pulvermaterials gemessen,
• eine Auswerteeinrichtung (52) führt eine Zustandsanalyse der gemessenen Presskraftverläufe (62, 64, 66) durch und bewertet auf Grundlage der Zustandsanalyse individuell den Zustand der oberen und/oder unteren Pressstempel (14, 16).

2. Verfahren nach Anspruch 1, **dadurch gekennzeichnet, dass** die Zustandsanalyse einen Vergleich der gemessenen Presskraftverläufe (62, 64, 66) mit mindestens einem Referenzpresskraftverlauf (62) umfasst.

3. Verfahren nach einem der vorhergehenden Ansprüche, **dadurch gekennzeichnet, dass** die Auswerteeinrichtung (52) im Rahmen der Zustandsanalyse die Breite der jeweils gemessenen Presskraftverläufe (62, 64, 66) als ein Kriterium für einen Verschleiß der jeweils bewerteten Pressstempel (14, 16) berücksichtigt und/oder dass die Auswerteeinrichtung (52) im Rahmen der Zustandsanalyse den Betrag des Maximums der jeweils gemessenen Presskraftverläufe (62, 64, 66) als ein Kriterium für einen Verschleiß der jeweils bewerteten Pressstempel (14, 16) berücksichtigt und/oder dass die Auswerteeinrichtung (52) im Rahmen der Zustandsanalyse das Vorliegen mehrerer Maxima und/oder den Abstand zwischen mehreren Maxima der jeweils gemessenen Presskraftverläufe (62, 64, 66) als ein Kriterium für einen Verschleiß der jeweils bewerteten Pressstempel (14, 16) berücksichtigt.

4. Verfahren nach einem der vorhergehenden Ansprüche, **dadurch gekennzeichnet, dass** die Auswerteeinrichtung (52) im Rahmen der Zustandsanalyse den Zeitpunkt des Anstiegs und/oder des Abstiegs der jeweils gemessenen Presskraftverläufe (62, 64, 66) als ein Kriterium für einen Verschleiß der jeweils bewerteten Pressstempel (14, 16) berücksichtigt und/oder dass die Auswerteeinrichtung (52) im Rahmen der Zustandsanalyse die Steigung des Anstiegs und/oder des Abstiegs der jeweils gemessenen Presskraftverläufe (62, 64, 66) als ein Kriterium für einen Verschleiß der jeweils bewerteten Pressstempel (14, 16) berücksichtigt.

5. Verfahren nach einem der Ansprüche 3 oder 4, **dadurch gekennzeichnet, dass** die Auswerteeinrichtung (52) bei Feststellen eines erhöhten Verschleißes eines bewerteten Pressstempels (14, 16) eine Warnmeldung ausgibt.

6. Verfahren nach Anspruch 5, **dadurch gekennzeichnet, dass** die Warnmeldung einen Vorschlag zum Reinigen und/oder zum Nachbehandeln des Pressstempels (14, 16) mit erhöhtem Verschleiß und/oder zum Austausch des Pressstempels (14, 16) mit erhöhtem Verschleiß durch einen neuen Pressstempel (14, 16) und/oder zum Austausch des gesamten Satzes von oberen und/oder unteren Pressstempeln (14, 16) der Rundläuferpresse durch einen Satz neuer oberer und/oder unterer Pressstempel (14, 16) umfasst.

7. Verfahren nach einem der vorhergehenden Ansprüche, **dadurch gekennzeichnet, dass** die Zustandsanalyse eine multivariate Datenanalyse umfasst, wobei die multivariate Datenanalyse vorzugsweise eine Hauptkomponentenanalyse und/oder ein multivariates Regressionsverfahren umfasst.

8. Verfahren nach einem der vorhergehenden Ansprüche, **dadurch gekennzeichnet, dass** die Auswerteeinrichtung (52) auf Grundlage der Zustandsanalyse den Zustand der Spiegelfläche und/oder den Zustand der Stempelspitze der jeweils bewerteten Pressstempel (14, 16) und/oder die von den jeweils bewerteten Pressstempeln (14, 16) ausgeübte Presskraft bewertet.

9. Verfahren nach einem der vorhergehenden Ansprüche, **dadurch gekennzeichnet, dass** die Auswerteeinrichtung (52) vor der Zustandsanalyse eine Datenvorverarbeitung der gemessenen Presskraftverläufe (62, 64, 66) durchführt, insbesondere eine Normierung, Glättung und/oder eine Ableitung erster oder höherer Ordnung.

10. Verfahren nach einem der vorhergehenden Ansprüche, **dadurch gekennzeichnet, dass** die Zustandsanalyse mittels Algorithmen des maschinellen Lernens durchgeführt wird.

11. Verfahren nach einem der vorhergehenden Ansprüche, **dadurch gekennzeichnet, dass** die Auswerteeinrichtung (52) Ergebnisse der Zustandsanalyse für eine Bedienperson anzeigt, vorzugsweise dass die Auswerteeinrichtung (52) eine Eingabeeinrichtung umfasst, über die eine Bedienperson Parameter für die Zustandsanalyse vorgeben kann.

12. Verfahren nach einem der vorhergehenden Ansprüche, **dadurch gekennzeichnet, dass** ein Presskraftsensor (56) an der oberen Druckrolle (40) und ein Presskraftsensor (60) an der unteren Druckrolle (42) der Druckeinrichtung (34) angeordnet ist, und dass die Presskraftverläufe (62, 64, 66) an den oberen und unteren Pressstempeln (14, 16) beim Durchlaufen der oberen und unteren Druckrollen (40, 42) gemessen werden.

13. Verfahren nach einem der vorhergehenden Ansprüche, **dadurch gekennzeichnet, dass** die Druckeinrichtung (34) weiterhin eine Vordruckeinrichtung (34) mit einer oberen Vordruckrolle (36) und einer unteren Vordruckrolle (38) umfasst, wobei ein Presskraftsensor an der oberen Vordruckrolle (36) und ein Presskraftsensor an der unteren Vordruckrolle (38) der Druckeinrichtung (34) angeordnet ist, und dass die Presskraftverläufe (62, 64, 66) an den oberen und unteren Pressstempeln (14, 16) beim Durchlaufen der oberen und unteren Vordruckrollen (36, 38) gemessen werden.

14. Rundläuferpresse, umfassend einen mittels eines Drehantriebs drehbaren Rotor, wobei der Rotor eine obere Stempelführung (18) für obere Pressstempel (14) und eine untere Stempelführung (20) für untere Pressstempel (16) sowie eine zwischen den Stempelführungen angeordnete Matrizenscheibe (10) aufweist, wobei die Pressstempel (14, 16) mit Kavitäten (12) der Matrizenscheibe (10) zusammenwirken, wobei die Rundläuferpresse weiter eine Fülleinrichtung (26) umfasst, durch die zu verpressendes Pulvermaterial in die Kavitäten (12) der Matrizenscheibe (10) gefüllt wird, und wobei die Rundläuferpresse eine Druckeinrichtung (34) mit einer oberen Druckrolle (40) und einer unteren Druckrolle (42) umfasst, die im Betrieb mit den oberen Pressstempeln (14) und mit den unteren Pressstempeln (16) zum Verpressen des Pulvermaterials in den Kavitäten (12) der Matrizenscheibe (10) zusammenwirken, **dadurch gekennzeichnet, dass** ein an der Druckeinrichtung (34) angeordneter Presskraftsensor (56, 60) vorgesehen ist zum Messen der Presskraftverläufe (62, 64, 66) an den oberen und/oder unteren Pressstempeln (14, 16) während des Verpressens des Pulvermaterials, und dass eine Auswerteeinrichtung (52) vorgesehen ist, die dazu ausgebildet ist, eine Zustandsanalyse der gemessenen Presskraftverläufe (62, 64, 66) durchzuführen und auf Grundlage der Zustandsanalyse individuell den Zustand der oberen und/oder unteren Pressstempel (14, 16) zu bewerten.

15. Rundläuferpresse nach Anspruch 14, **dadurch gekennzeichnet, dass** die Rundläuferpresse, insbesondere die Auswerteeinrichtung, zur Durchführung des Verfahrens nach einem der Ansprüche 1 bis 13 ausgebildet ist.
